## Europäisches Patentamt

## European Patent Office

## Office européen des brevets

(11) Publication number: **0 287 393**
**A2**

# (12) EUROPEAN PATENT APPLICATION

(21) Application number: **88303425.8**

(22) Date of filing: **15.04.88**

(51) Int. Cl.⁴: **G 05 D 23/20**
**B 60 H 1/00**

(30) Priority: **15.04.87 JP 57299/87**

(43) Date of publication of application:
**19.10.88 Bulletin 88/42**

(84) Designated Contracting States: **DE FR GB IT SE**

(71) Applicant: **SANDEN CORPORATION**
**20 Kotobuki-cho**
**Isesaki-shi Gunma, 372 (JP)**

(72) Inventor: **Akabane, Hidemitsu**
**880 Kami-Namie-cho**
**Takasaki-shi Gunma, 370 (JP)**

**Tamura, Yasuji**
**803-27 Oaza-Iwamatsu Ojima-machi**
**Nitta-gun Gunma (JP)**

**Hoshino, Seiichi**
**113-1 Kizaki Nitta-machi**
**Nitta-gun Gunma, 370-03 (JP)**

(74) Representative: **Brunner, Michael John et al**
**GILL JENNINGS & EVERY 53-64 Chancery Lane**
**London WC2A 1HN (GB)**

(54) Control device for automotive air conditioning system.

(57) A vehicle air-conditioning control device includes a heater core (12) for heating the air, temperature sensors (24) for detecting the temperature of the air, air mix dampers (16) for adjusting the volume of the air through passing the heater core, a water valve (15) for adjusting the volume of the water for cooling an automobile engine (14), an actuator (18) for operating the air mix damper and the water valve, and a control unit (20). The control unit compares a desired position ($\theta$), an actual position ($\theta_p$) and predetermined positions ($\theta_s, \theta_o$) of the opening angle of the actuator to each other, and thereby controls the temperature of the air which is blown out from an automotive air conditioning system in accordance with the compared results.

EP 0 287 393 A2

## Description

## CONTROL DEVICE FOR AUTOMOTIVE AIR CONDITIONING SYSTEM

This invention relates to an automotive air conditioning system, and more particularly, to a control device for controlling an opening angle of an air mix damper and a water valve to adjust the temperature of the air blown out therefrom.

In an automotive air conditioning system which has an automatic control device, the automatic control device conventionally detects an automobile compartment air temperature and an ambient air temperature and compares a predetermined air temperature with the detected air temperatures. The proportion of the air heated by a heater core to the air flowing within a duct is determined in accordance with an opening angle of an air mix damper which an actuator operates based on the result of the comparison. The opening angle of a water valve also is determined together with that of the air mix damper at the same time since the air mix damper is mechanically coupled with the water valve through a wire, link or the like, to be operated together and is operated by actuator which is also coupled with air mix damper through a wire.

In the above automotive air conditioning system, there is hysteresis in the timing of the opening and closing operation of the water valve. Although the water valve is coupled with the air mix damper as described above, since those are mechanically connected each other, the water valve does not open until the air mix damper opens at an predetermined opening angle. Accordingly, since the air mix damper has already opened at the predetermined opening angle when the water valve opens, the temperature of the air which is blown out from an outlet of the air conditioning system is initially adjusted to cause slight heating. Therefore, passengers in the compartment of the automobile feel uncomfortable.

It is an object of this invention to provide an automotive air conditioning system which can continuously control the temprature of the air blown out therefrom in response to an opening angle of an air mix damper.

The above object of this invention is achieved by providing a control device which includes a heater core for heating the air, temperature sensors for detecting the temperature of the air, air mix dampers for adjusting the volume of air passing through the heater core, a water valve for adjusting the volume of cooling water from an automobile engine, an actuator for operating the air mix damper and the water valve and a control unit. The control unit comprises: first comparison means for comparing a desired position with an actual position of the opening angle of the actuator means and providing a first control signal when the desired position equals the actual position; second comparison means for comparing the actual position with a closed position and a first predetermined position of the opening angle of the actuator, and the desired position with the actual position and a second predetermined position of the opening angle of the actuator in response to the comparison by the first comparison means and the absence of the first control signal, the second comparison means providing a second control signal when the actual position is equal to or greater than the closed position and below the first predetermined position, and the desired position is greater than the actual position and below the second predetermined position, wherein the actuator operates in the direction of opening of the air mix damper means and water valve in response to the second signal; third comparison means for comparing the actual position with the second predetermined position and providing a third control signal when the actual position equals the second predetermined position, wherein the actuator stops in response to the third control signal; and fourth comparison means for comparing the desired position with the actual position and providing a fourth control signal when the desired position equals the actual position, wherein the actuator stops in response to the fourth control signal.

Further objects, features and other aspects of this invention will be understood from the detailed description of the preferred embodiments of this invention in connection with the accompanying drawings, in which:-

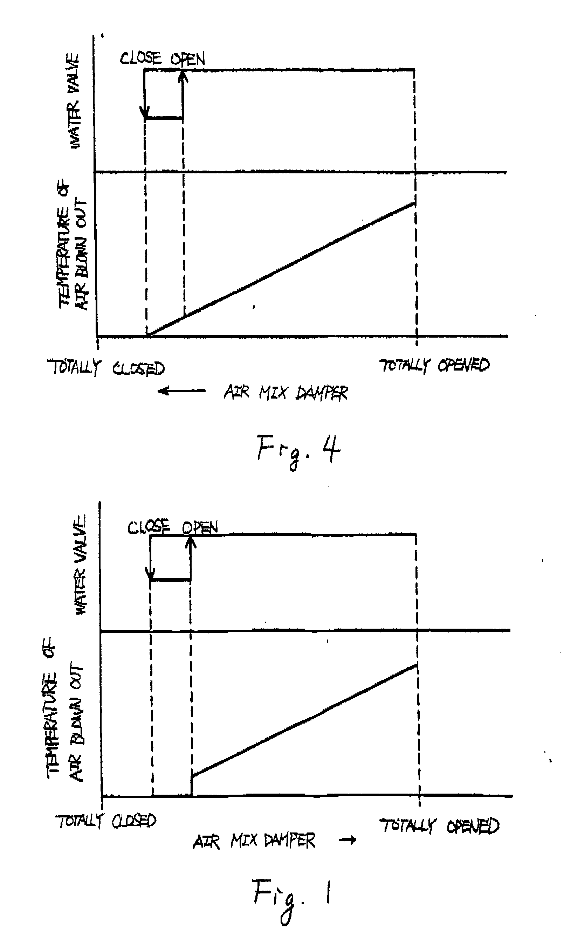

Figure 1 is a graph illustrating the relationship between the angle of an air mix damper and the temperature of the air blown out therefrom in a conventional automotive air conditioning system;

Figure 2 is a schematic view of an automotive air conditioning system of this invention;

Figure 3 is a flow chart which illustrates the operation of a control device in accordance with one embodiment of this invention; and,

Figure 4 is a graph illustrating the relationship between the opening angle of an air mix damper and temperature of the air blown out therefrom in an automotive air conditioning system as shown in Figures 2 and 3.

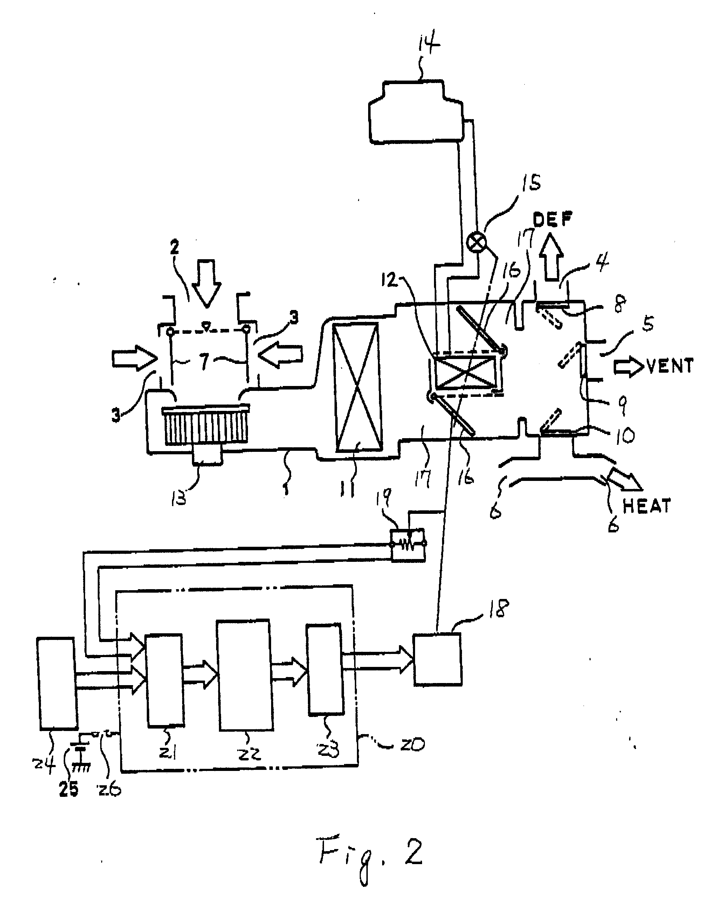

Referring to Figure 2, the arrangement of an automotive air conditioning system according to this invention is shown.

Duct 1 has fresh air inlet 2 and recirculated air inlet 3 at its upstream end, and defroster air outlet 4, upper air outlet 5 and lower air outlet 6 at its downstream end. Arranged in duct 1 are a first selector damper 7 disposed to selectively assume a recirculated air intaking position or a fresh air intaking position, a second selector damper 8 disposed to selectively assume a defroster discharge position or a closed position, a third selector damper 9 disposed to selectively assume an upper discharge position or a closed position, and a fourth selector damper 10 disposed to selectively assume a lower discharge position or a closed position. Also provided at an axially intermediate location in duct 1 are an evaporator 11 and heater core 12, the latter being downstream of the former. A blower 13 is also provided upstream of evaporator 11. Evaporator 11 is a part of a refrigerating circuit and heater core 12 is heated by cooling water from an automobile engine 14. The volume of cooling water flowing into core 12 is controlled by a water valve 15 which is disposed in the conduit between heater core 12 and engine 14. Air mix dampers 16 are provided on both sides of the heater core 12 and adjust the proportion of the volume of the air which passes through the heater core 12 to the volume of the air on which passes through bypass 17, thereby controlling the degree of heating of the air by the heater core 12. Air mix dampers 16 are mechanically coupled with the water valve 15 through a wire, link or the like, to be operated together they are operated by actuator 18. Potentiometer 19 is provided on actuator 18 and electrically communicates the position of actuator 18 to a control device 20.

Control device 20 includes A/D converter 21, micro-computer 22 and driver 23, connected in series. Potentiometer 19 and a plurality of sensors 24, for example, a room air temperature sensor, an ambient air temperature sensor, an evaporator temperature sensor, a water temperature sensor, a sunlight temperature sensor, etc., are connected to control device 20. Also, control device 20 is connected to a battery 25 through an ignition switch 26. Micro-computer 22 computes the temperature of the air blown out of an automobile compartment based on signals detected at sensors 24 and outputs signals to actuator 18 and blower 13 to control the opening angle of the air mix dampers 16 and the voltage of blower 13.

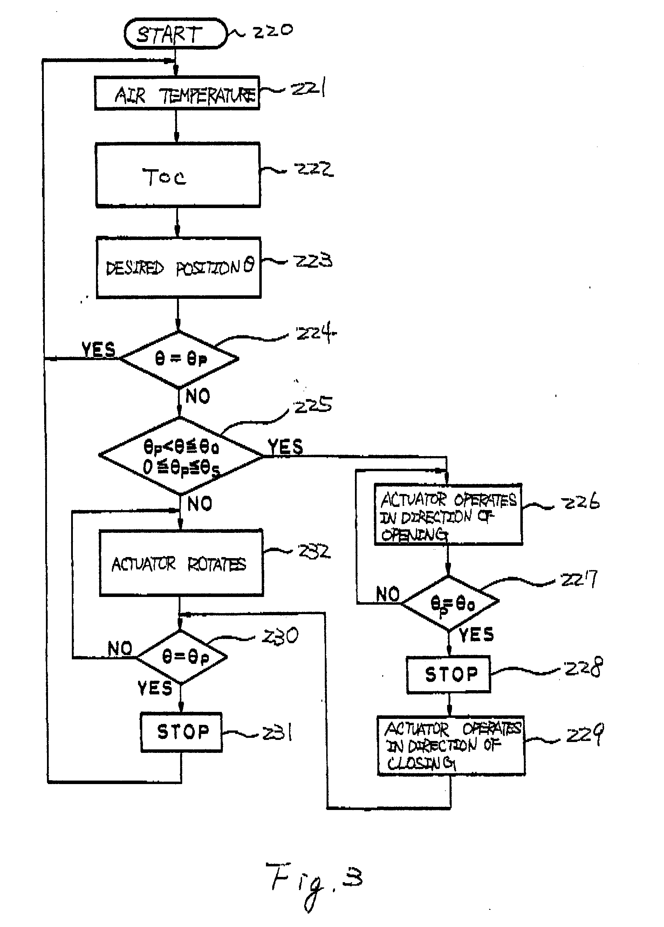

Referring to Figure 3, a flow chart for the micro-computer in the control device 20 is shown. When the automotive air conditioning system is turned on in step 220, micro-computer 22 starts to input the signals of the temperatures which are detected by the sensors 24 in step 221. Therefore, temperature Toc of the air which flows out from the air conditioning system necessary for maintaining the temperature of the air in the compartment is set in step 222 based on the detected temperatures. Temperature Toc is determined from the following equation,

$$T_{oc} = a.T_{set} + b.T_{car} + c.T_{out} + d.T_{1c} + e$$

wherein $T_{set}$ represents a predetermined air temperature, $T_{car}$ represents a compartment air temperature, $T_{out}$ represents an ambient air temperature and $T_{1c}$ represents a sunlight temperature, each of which is detected by sensors 24, and a, b, c, d and e represent predetermined values.

Then, in step 223, desired position $\theta$ of an opening angle of actuator 18 necessary for controlling the temperature of the air corresponding to temperature $T_{oc}$ is computed, and determined from the following equation:

$$\theta = l.T_{oc} + m.T_{eva} + n$$

wherein $T_{eva}$ represents the temperature of the air before blowing into the heater core 12, and l, m and n represent predetermined values.

In step 224, desired position $\theta$ of an opening angle of actuator 18 is compared with actual position $\theta_p$ of an opening angle of actuator 18. When desired position $\theta$ equals actual position $\theta_p$, control returns to step 221. Otherwise, control passes to step 225. In step 225 actual position $\theta_p$ of actuator 18 is compared with first predetermined position $\theta_s$ of an opening angle of actuator 18 in correspondence to an opening angle of air mix damper 16 and desired position $\theta_o$ of an opening angle of actuator 18. First predetermined positon $\theta_s$ is predetermined to be greater than position 0, at which actuator 18 totally closed, in correspondence to the position at which air mix damper 16 totally closed. Second predetermined position $\theta_o$ of an opening angle of actuator 18 is predetermined to be greater than the first predetermined position. If actual position $\theta_p$ is equal to or greater than position 0 and below first predetermined position $\theta_s$, and desired position $\theta$ is greater than actual position $\theta_p$ and below second predetermined position $\theta_o$, control passes to step 226. Actuator 18 is rotated in the direction of opening thereof in step 226. In step 227, actual position $\theta_p$ is compared with second predetermined position $\theta_o$. If actual position $\theta_p$ equals second predetermined position $\theta_o$, actuator 18 stops in step 228. Otherwise, control returns to step 226. Actuator 18 is rotated in the direction of closing in step 229, and thereafter control passes to step 230. In step 230, desired position $\theta$ is compared with first predetermined position $\theta_p$. If desired position $\theta$ equals first predetermined position $\theta_p$, actuator 18 stops in step 231. Otherwise, control passes to step 232.

In step 225, if the above conditions are not met control passes to step 232. Actuator 18 starts to rotate in step 232. Thereafter, actual position $\theta_p$ is compared with desired position in step 230. If actual position $\theta_p$ equals desired position $\theta$, actuator 18 stops in step 231. Otherwise, control returns to step 232.

In the above embodiment, although actuator 18 is used as a drive source to operate an air mix damper and a water valve, negative pressure of an automobile engine can be used as the drive source. A construction in which actuator 18 directly operates an air mix damper and a water valve can also be used.

**Claims**

1. A device for controlling the temperature of the air blown out from an automotive air conditioning system having a heater core (12) and temperature sensors (24), the device comprising: air mix damper means (16) for adjusting the volume of air passing through the heater heater core, water valve means for adjusting the volume of cooling water from an automobile engine (14), actuator means (18) for operating the air mix damper means and the water valve means, and control means (20) for controlling the actuator means, characterized in that the control means comprises:

first comparison means (224) for comparing a desired position ($\theta$) with an actual position ($\theta_p$) of the opening angle of the actuator means and providing a first control signal when the desired position ($\theta$) equals the actual position ($\theta_p$);

second comparison means (225) for comparing the actual position ($\theta_p$) with a closed position (0) and a first predetermined position ($\theta_s$) of the opening angle of the actuator, and the desired position ($\theta$) with the actual position ($\theta_p$) and a second predetermined position ($\theta_o$) of the opening angle of the actuator in response to the comparison by the first comparison means and the absence of the first control signal, the second comparison means providing a second control signal when the actual position ($\theta_p$) is equal to or greater than the closed position (0) and below the first predetermined position ($\theta_s$), and the desired position ($\theta$) is greater than the actual position ($\theta_p$) and below the second predetermined position ($\theta_o$), wherein the actuator operates in the direction of opening of the air mix damper means (16) and water valve (15) in response to the second signal;

third comparison means (227) for comparing the actual position ($\theta_p$) with the second predetermined position and providing a third control signal when the actual position ($\theta_p$) equals the second predetermined position ($\theta_o$), wherein the actuator stops in response to the third control signal; and,

fourth comparison means (230) for comparing the desired position ($\theta$) with the actual position ($\theta_p$) and providing a fourth control signal when the desired position ($\theta$) equals the actual position ($\theta_p$), wherein the actuator stops in response to the fourth control signal.

2. A device according to claim 1, wherein the actuator is operated in response to the comparison by the second comparison means (225) and the absence of the second control signal.

3. A device according to claim 1 or claim 2, wherein, after comparison by the third comprison means (227), the presence of the third control signal and the actuator stop, the actuator operates in the direction of closing.

0287393

Fig. 4

Fig. 1

0287393

Fig. 2

Fig. 3